# EUROPÄISCHE PATENTSCHRIFT

(11) **EP 3 987 199 B1**
(45) Veröffentlichungstag und Bekanntmachung des Hinweises auf die Patenterteilung: **15.11.2023**
(21) Anmeldenummer: 20732850.1
(22) Anmeldetag: 12.06.2020
(51) Int. Cl.: F16H 25/20, B62D 1/181

(54) **KOPPLUNGSELEMENT ZUR ANBRINGUNG AN EINER GEWINDESPINDEL, SYSTEM MIT EINER GEWINDESPINDEL UND EINEM KOPPLUNGSELEMENT, SPINDELTRIEB UND LENKSÄULE**
COUPLING ELEMENT FOR MOUNTING ON A THREADED SPINDLE, SYSTEM WITH A THREADED SPINDLE AND A COUPLING ELEMENT, SPINDLE DRIVE AND STEERING COLUMN
ÉLÉMENT D'ACCOUPLEMENT À MONTER SUR UNE BARRE FILETÉE, SYSTÈME AVEC UNE BARRE FILETÉE ET UN ÉLÉMENT D'ACCOUPLEMENT, ENTRAÎNEMENT À BROCHE ET COLONNE DE DIRECTION

(30) Priorität: 21.06.2019 DE 102019209036
(43) Veröffentlichungstag der Anmeldung: 27.04.2022
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SPECHT, Jean-Pierre, 9469 Haag (CH)
(74) Vertreter: thyssenkrupp Intellectual Property GmbH
(86) Internationale Anmeldenummer: PCT/EP2020/066264
(87) Internationale Veröffentlichungsnummer: WO 2020/254200

(56) Entgegenhaltungen:
- EP-A1- 3 208 474
- EP-A1- 3 208 474
- WO-A1-2015/144527
- DE-A1-102007 041 100
- DE-A1-102007 041 100
- DE-A1-102014 104 362
- DE-A1-102014 104 362
- US-A1- 2006 270 330
- US-A1- 2006 270 330
- US-A1- 2009 126 521
- US-A1- 2009 126 521

## Beschreibung

### Stand der Technik

Die Erfindung betrifft ein Kopplungselement, das einen Aufnahmeabschnitt zur Anbringung an einer Gewindespindel und einen Koppelabschnitt zur Verbindung mit einer Lenksäule aufweist, wobei der Koppelabschnitt und der Aufnahmeabschnitt in einer Achsrichtung ausgerichtet sind. Ein System mit einer Gewindespindel und mit einem derartigen Kopplungselement, ein Spindeltrieb mit einem derartigen System sowie eine Lenksäule für ein Kraftfahrzeug, die als Verstellantrieb einen derartigen Spindeltrieb aufweist, sind ebenfalls Gegenstand der Erfindung.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Manteleinheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um eine Achse, nämlich die Gewindespindelachse oder kurz Spindelachse, drehend antreibbar, wodurch die Gewindespindel und die Spindelmutterje nach Drehrichtung in Richtung der Gewindespindelachse translatorisch aufeinander zu oder voneinander weg bewegt werden können. In einer Ausführungsform die Gewindespindel bezüglich Drehung um ihre Spindelachse unverdrehbar mit der Trageinheit oder alternativ mit der Stelleinheit gekoppelt und die Spindelmutter ist drehbar, aber in Richtung der Spindelachse feststehend entsprechend an der Stelleinheit oder alternativ an der Trageinheit gelagert.

Der Spindeltrieb stützt sich mit der Gewindespindel an der Trageinheit oder an der Stelleinheit ab, und mit der Spindelmutter entsprechend an der Stelleinheit oder an der Trageinheit, so dass die Gewindespindel in Richtung der Spindelachse translatorisch verschiebbar ist, indem die Spindelmutter von der Antriebseinheit um die Spindelachse drehend angetrieben wird. Diese Ausführung wird als Tauchspindelantrieb bezeichnet.

Durch den rotatorischen Antrieb der Spindelmutter kann eine translatorische Verstellung von Trageinheit und Stelleinheit relativ zueinander in Achsrichtung der Spindelachse bewirkt werden.

Zur Realisierung einer Längsverstellung der Stelleinheit in Richtung der Längsachse der Lenkspindel kann ein Spindeltrieb eines Verstellantriebs zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Spindelachse im Wesentlichen parallel zur Längsachse der Lenkspindel ausgerichtet sein kann. Zur Realisierung einer Höhenverstellung quer zur Längsachse kann ein Spindeltrieb zwischen der Trageinheit und einer daran höhenverschwenkbar gelagerten Stelleinheit oder Manteleinheit, in der die Stelleinheit aufgenommen ist, angeordnet sein. An einer Lenksäule können eine motorische Längs- und Höhenverstellung einzeln oder in Kombination ausgebildet sein.

Zur Verbindung mit dem durch den Spindeltrieb bewegten Bauteil der Lenksäule weist die Gewindespindel ein Kopplungselement auf, der beispielsweise in Form eines Gelenkkopfes ausgebildet sein kann. In der gattungsgemäßen Bauform wird ein Kopplungselement zunächst separat gefertigt und anschließend dreh-und zugfest an dem freien Ende der Gewindespindel angebracht, wie dies beispielsweise im Stand der Technik für einen Verstellantrieb für eine Lenksäule eines Kraftfahrzeugs in der DE 10 2017 207 561 A1 beschrieben ist. Ein separat bereitgestelltes, nachträglich an der Gewindespindel befestigtes Kopplungselement ist im Hinblick auf eine rationelle und flexible Fertigung vorteilhaft.

Ein bekanntes Kopplungselement weist als funktionale Abschnitte einen Aufnahmeabschnitt auf zur festen Verbindung mit einem freien Ende der Gewindespindel, und einen Koppelabschnitt zur Ankopplung an die Lenksäule, beispielsweise einen Gelenkkopf, der eine plattenförmige Gelenklasche mit einer quer zur Spindelachse durchgehenden Gelenkbohrung zur gelenkigen Anbindung an eine Mantel- oder Trageinheit aufweist.

Im Stand der Technik ist ein Kopplungselement mit einem rohr- oder hülsenförmigen Aufnahmeabschnitt bekannt, der sich von dem plattenförmigen Koppelabschnitt in Richtung der Spindelachse - gleichbedeutend auch als Achsrichtung oder Spindelrichtung bezeichnet - erstreckt. Der als rohrförmiger Hohlkörper ausgebildete, hülsenförmige Aufnahmeabschnitt ermöglicht zwar eine passgenaue Montage und feste Verbindung, erfordert jedoch durch die erforderlichen Form- bzw. Umformoperationen auch bei einer an sich rationellen Fertigung als Fließpress- bzw. Pressformteil einen relativ hohen Herstellungsaufwand.

Aus der US 2006/0270330 A1 ist ein Kopplungselement bekannt, das an eine Gewindespindel angeschweißt oder mit dieser mittels eines Spannstifts fixiert ist. Diese Ausführungen sind ebenfalls relativ aufwendig.

Angesichts der vorangehend erläuterten Problematik ist es eine Aufgabe der vorliegenden Erfindung, ein Kopplungselement zur Verfügung zu stellen, welches rationeller und flexibler gefertigt werden kann, sowie eine damit ausgerüstete Gewindespindel, ein Spindeltrieb mit einer derartigen Gewindespindel sowie eine Lenksäule für ein Kraftfahrzeug, die als Verstellantrieb einen derartigen Spindeltrieb aufweist.

### Darstellung der Erfindung

Diese Aufgabe wird erfindungsgemäß gelöst durch ein Kopplungselement mit den Merkmalen des Anspruchs 1, ein System mit einer Gewindespindel und einem Kopplungselement gemäß Anspruch 8, einen Spindeltrieb gemäß Anspruch 13, sowie eine Lenksäule gemäß Anspruch 14. Ein Verfahren zur rationellen Fertigung einer Gewindespindel mit einem Kopplungselement wird erfindungsgemäß in Anspruch 16 angegeben. Vorteilhafte Weiterbildungen ergeben sich aus den Unteransprüchen.

Bei einem Kopplungselement, das einen Aufnahmeabschnitt zur Anbringung an einer Gewindespindel und einen Koppelabschnitt zur Verbindung mit einer Lenksäule aufweist, wobei der Koppelabschnitt und der Aufnahmeabschnitt in einer Achsrichtung ausgerichtet sind, wobei ein plattenförmiger Grundkörper den Aufnahmeabschnitt und den Koppelabschnitt aufweist, ist erfindungsgemäß vorgesehen, dass der Aufnahmeabschnitt zwei Arme (Fortsätze) aufweist, die sich in Achsrichtung von dem Koppelabschnitt erstrecken, mit einander quer zur Achsrichtung gegenüberliegenden Innenseiten, wobei zumindest ein Arm mindestens ein von seiner Innenseite vorstehendes Formschlusselement aufweist.

Erfindungsgemäß ist vorgesehen, dass zumindest ein Arm mindestens ein von seiner Innenseite vorstehendes Formschlusselement aufweist. Ein derartiges Formschlusselement ist beispielweise gegen den Außenumfang einer zur Befestigung zwischen den Armen angeordneten Gewindespindel gerichtet. Dabei können ein oder mehrere Formschlusselemente, bevorzugt an den einander gegenüberliegenden Innenseiten beider Arme, bevorzugt zur Erzeugung eines mindestens in Achsrichtung wirksamen Formschlusses mit dem Außengewinde der Gewindespindel ausgebildet und angeordnet sein. Es können beispielsweise eine Art Gewindegänge über die Dicke der Arme ausgebildet sein, welche von außen in das Außengewinde eingreifen und einen in Achsrichtung wirksamen Formschluss zwischen den Armen und dem Außengewinde erzeugen. Die Arme werden zur Montage auf der Gewindespindel elastisch verformt, so dass diese nach der Montage auf der Gewindespindel auf diese eine elastische Vorspannung ausüben in einer Richtung quer zur Achsrichtung.

Der plattenförmige Grundkörper kann bevorzugt einstückig ausgebildet sein, wobei er den Aufnahmeabschnitt und den Koppelabschnitt einstückig umfasst. Dadurch werden eine rationelle Fertigung, eine hohe Festigkeit und ein vorteilhaft geringes Bauvolumen und Gewicht ermöglicht.

Die Arme erstrecken sich ausgehend von dem Koppelabschnitt aus in Achsrichtung und weisen jeweils ein freies Ende auf, welches von dem Koppelabschnitt beabstandet ist und von dem Koppelabschnitt weg gerichtet ist.

Der plattenförmige Grundkörper kann bevorzugt einstückig ausgebildet sein, wobei er den Aufnahmeabschnitt und den Koppelabschnitt integral einstückig umfasst. Dank dieser Maßnahme kann die Fertigung weiter verbessert und vereinfacht werden.

Beispielsweise kann der Gelenkkopf bevorzugt durch eine Stanzoperation hergestellt werden. Somit ist der Gelenkkopf bevorzugt als Stanzbauteil ausgebildet.

Bevorzugt ist der Grundkörper plan ausgebildet ist. Die beiden erfindungsgemäßen Arme erstrecken sich im Wesentlichen parallel zur Achsrichtung in der Plattenebene, so dass eine Art ebene Gabel geformt wird. Unter "im Wesentlichen parallel" ist stets eine Abweichung gegenüber einer idealen Parallelität von ±10° bezogen auf die Achsrichtung zu verstehen. Zwischen den Armen ist die Gewindespindel festlegbar, die dabei ebenfalls parallel zur Achsrichtung ausgerichtet ist, wie weiter unten noch erläutert wird. Die beiden Arme stehen nebeneinander von dem Koppelabschnitt in Achsrichtung ab, der bevorzugt ebenfalls plattenförmig in besagter Plattenebene ausgebildet ist. Zur Anbindung an die Lenksäule, beispielsweise an den Führungskasten, die Mantel-, Stell- oder Trageinheit, kann der Koppelabschnitt ein Verbindungsmittel aufweisen, beispielsweise eine quer zur Spindelachse durchgehende Öffnung bzw. Bohrung, so dass ein Gelenkkopf gebildet wird. Mittels eines dadurch hindurchgeführten Gelenkbolzens kann einfach eine gelenkige Anbindung realisiert werden. Die Öffnung kann sowohl durch eine spanende oder durch eine trennende Operation, wie Stanzen, eingebracht werden. Alternativ oder zusätzlich können - durch spanende oder bevorzugt nichtspanende Bearbeitung - Formschlusselemente in den Koppelabschnitt eingebracht werden, wie beispielsweise Vorsprünge, Vertiefungen, Ab- und Umkantungen, Sicken oder dergleichen.

Vorzugsweise ist vorgesehen, dass der Grundkörper plan ausgebildet ist. Der Grundkörper erstreckt sich dabei eben parallel zur Plattenebene. Die Fertigung kann rationell durch Stanzen oder Feinschneiden aus einem planen, d.h. ebenen Blechabschnitt erfolgen. Dabei können die erfindungsgemäßen Arme, und gegebenenfalls Verbindungsmittel am Koppelabschnitt wie Öffnungen oder dergleichen in einem Fertigungsschritt erzeugt werden. Die Dicke des Grundkörpers, welche die Abmessung senkrecht zur Plattenebene bezeichnet, kann dabei vorzugsweise durchgehend gleich sein und mit der Dicke, d.h. der Materialstärke des genannten Blechabschnitts korrespondieren. Unter der gleichbleibenden Dicke sind auch Abweichungen in der Dicke von ±10% von einer gemittelten Dicke zu verstehen.

Bevorzugt ist die Dicke kleiner gleich 10mm, besonders bevorzugt kleiner gleich 7mm, ganz besonders bevorzugt kleiner als 5mm. Bevorzugt ist die Dicke größer gleich 2mm.

Das Kopplungselement kann bevorzugt einen lamellaren schichtartigen Aufbau aufweisen. Mit anderen Worten kann das Kopplungselement aus einer Mehrzahl von miteinander verbundenen Lamellen gebildet sein. Die Lamellen sind bevorzugt durch einzelne, bevorzugt deckungsgleiche Platinen gebildet. Bevorzugt weist eine Platine eine Dicke von mindestens 0,1 mm auf, bevorzugt ist die Dicke kleiner gleich 2mm. Die Lamellen sind miteinander fest verbunden, beispielsweise stoffschlüssig durch Schweißen, Löten, Kleben oder dergleichen, und/oder formschlüssig, beispielsweise durch ineinander greifende oder eingefügte Formschlusselemente. Die Lamellen weisen bevorzugt alle die gleiche Dicke auf. Es ist aber auch denkbar und möglich, dass die Lamellen unterschiedliche Dicken aufweisen. Bevorzugt sind die Lamellen alle aus dem gleichen Werkstoff gebildet. Es ist ebenfalls denkbar und möglich, die Lamellen aus unterschiedlichen Werkstoffen zu bilden und miteinander zu verbinden. Die Summe der einzelnen Dicken der Lamellen bilden die Dicke des Kopplungselements. Dank dieser Ausbildung des Kopplungselements kann die Herstellung weiter vereinfacht werden und eine modulare Bauweise bereitgestellt werden, da entsprechend unterschiedliche Kopplungselementedurch gleichartige Lamellen bereitgestellt werden können, in dem einfach die Anzahl der verwendeten Lamellen je nach vorherrschenden Anforderungen variiert werden kann. Bevorzugt ist ein Koppelelement durch mindestens zwei Lamellen gebildet, bevorzugt durch drei, vier, fünf, sechs, sieben oder mehr Lamellen gebildet. Weiters besteht die Möglichkeit durch den schichtartigen Aufbau eine Dämpfung von Schwingen herbeizuführen.

Die Lamellen bzw. Platinen sind bevorzugt aus einem Blech gebildet und bevorzugt durch Stanzen hergestellt. Die Platinen können mittels einer stoffschlüssigen Verbindung wie Kleben, Schweißen oder Löten miteinander verbunden sein. Besonders vorteilhaft ist die Bereitstellung der Verbindung mittels einer Punktschweißoperation. Alternativ oder zusätzlich können diese durch eine formschlüssige Verbindung miteinander verbunden sein, wie beispielsweise mittels Pressen oder Durchsetzfügen.

Bevorzugt kann vorgesehen sein, dass der Grundkörper eine Dicke hat, die kleiner ist als der Querabstand zwischen den Innenseiten der Arme. Die Dicke bezeichnet die Abmessung senkrecht zur Plattenebene, und gibt damit die Dicke der Arme an, also der Abmessung der Arme in Umfangsrichtung eines innen zwischen den Innenseiten angeordneten Gewindespindel. Der Querabstand bezeichnet den Abstand innen zwischen den Innenseiten, quer zur Achsrichtung gemessen. Der Querabstand wird an den Außendurchmesser der Gewindespindel, den Gewindenenndurchmesser angepasst, so dass die Gewindespindel dazwischen eingesetzt und festgelegt werden kann. Die gesamte Querabmessung im Bereich der Arme entspricht der Summe aus dem Querabstand der Arme, und der Breite der Arme, ebenfalls quer zur Achsrichtung gemessen. Folglich hat der Grundkörper insgesamt eine flache Bauform. Draus resultiert der Vorteil einer hohen Steifigkeit in der Plattenebene, und einer durch eine Verringerung der Dicke vorgebbaren Elastizität quer zur Plattenebene. Außerdem kann die durch die Arme gebildete flache Gabel einfach parallel zur Gewindespindel orientiert und ausgerichtet werden.

Es kann weiterhin vorgesehen sein, dass die Arme radial von außen plastisch in die Gewindespindel eingeformt sind, zur Erzeugung eines in Umfangsrichtung wirksamen Formschlusses. Wie oben ausgeführt, ist die Dicke der Arme kleiner als der Gewindenenndurchmesser des Außengewindes, bevorzugt kleiner als der Kerndurchmesser des Außengewindes, weiter bevorzugt kleiner als der 0,5-fache (=halbe) Gewindenenndurchmesser. Dadurch können die Arme quer zur Achsrichtung gegeneinander, und damit mit ihren Innenseiten radial von außen plastisch in die Gewindegänge des Außengewindes eingepresst werden. Es erfolgt eine dauerhafte Materialumformung, und es wird ein in Umfangsrichtung wirksamer Formschluss zwischen den Armen und der Gewindespindel erzeugt. Auf diese Weise kann eine optimale Ausrichtung des Koppelabschnitts parallel zur Spindelachse erfolgen, und der Formschluss in Achs- und Umfangsrichtung bewirkt eine besonders haltbare und sichere Verbindung, die mit geringem Fertigungsaufwand erzeugt werden kann.

Alternativ oder zusätzlich kann der Gewindezahn des Außengewindes derart plastisch deformiert werden, dass die Arme in Umfangsrichtung um die Achsrichtung formschlüssig auf der Gewindespindel festgelegt sind.

Eine Ausführung der Erfindung kann vorsehen, dass ein Fixierelement mit dem Aufnahmeabschnitt verbindbar ist, welches an den Armen angreift und quer zur Achsrichtung abstützt. Das Fixierelement fixiert die Arme in ihrer Position quer zur Achsrichtung relativ zueinander, und hält die Arme von außen. Dadurch wird sichergestellt, dass eine zwischen den Armen angebrachte Gewindespindel sicher gehalten wird. Insbesondere wird durch das Fixierelement ein Aufbiegen der Arme nach außen wirksam verhindert, welches im ungünstigen Fall durch hohe Querkräfte entstehen könnte und die Verbindung zwischen Kopplungselement und Gewindespindel schwächen oder lösen könnte.

Das Fixierelement kann einen die Arme umgreifenden Haltering umfassen. Der Haltering kann an dem Kopplungselement im Bereich des Aufnahmeabschnitts angebracht sein, vorzugsweise koaxial zur Spindelachse, so dass er die Arme von außen umgibt und dadurch nach außen abstützt. Bevorzugt liegt der Haltering mit seinem Innenumfang von außen an den Armen an, als ein Art Klemm- oder Spannring, so dass eine Abstützung in radialer Richtung bezogen auf die Achse ermöglicht wird. Eine hohe Festigkeit und Steifigkeit der Verbindung kann dadurch erreicht werden, dass der Haltering als geschlossener Ring ausgebildet ist, der die Arme umschließt. Es ist auch möglich, den Haltering offen auszubilden, um beispielsweise die Montage zu erleichtern.

In einer Weiterbildung ist es möglich, dass das Fixierelement und der Aufnahmeabschnitt miteinander zusammenwirkende Spannmittel aufweisen. Die Spannmittel können beispielsweise miteinander korrespondierende keilförmige oder konische Spannschrägen außen an den Armen und innen im Fixierelement umfassen. Die Spannschrägen können so ausgebildet und angeordnet sein, wie dies im Prinzip von einer Spannhülse oder einem Spannfutter bekannt ist, so dass ein axiales Aufpressen des Spannelements auf die frei vorstehenden Enden der Arme ein radiales Zusammendrücken der Arme bewirkt. Durch eine flach gegen die Achsrichtung abfallende Spannschräge kann eine große Kraftübersetzung erzeugt werden, so dass eine auf das Spannelement ausgeübte Axialkraft verstärkt wird zu einer hohen Spannkraft, welche die Arme gegeneinander zusammendrückt, und die Innenseiten der Arme fest gegen eine dazwischen angeordnete Gewindespindel anpresst.

Eine Ausführung der Erfindung kann vorsehen, dass ein System nach Anspruch 8 gebildet wird.

Es kann vorgesehen sein, dass ein Funktionselement einer Energieabsorptionseinrichtung einstückig mit dem Kopplungselement ausgebildet ist. Ein Funktionselement kann beispielsweise ein Verformungselement sein, welches bei einer Relativbewegung eines Verstellantriebs relativ zur Lenksäule in Crashfall unter Energieabsorption kinetischer Aufprallenergie entweder selbst plastisch verformt wird, oder eine energieabsorbierende Verformung eines anderen Elements bewirkt. Beispielsweise kann ein Aufweitungselement in Form eines Dorns, Keils oder dergleichen an den Pressabschnitt oder den Koppelabschnitt angeformt sein. Das Aufweitungselement kann im Crashfall beispielsweise über einen Crashweg entlang der Längsachse der Lenksäule durch einen Schlitz, der relativ zum Aufweitungselement Untermaß hat, gezwängt werden, und der dabei unter Energieabsorption plastisch aufgeweitet wird. Auch andere an sich bekannte Formen von Energieabsorptionselementen, beispielsweise Reiß- oder Biegelaschen, oder kombinierte Reiß-Biege-Elemente, können einstückig mit dem Rohrabschnitt oder dem einstückigen Blechabschnitt ausgebildet sein. Es kann auch vorgesehen sein, dass das Funktionselement als Widerlager in einem Crashelement, wie einen Biegedraht, eingreift, wobei sich dieses Crashelement im Crashfall an dem Funktionselement abstützt.

Das Kopplungselement kann einzelne der oben beschriebenen erfindungsgemäßen Merkmale aufweisen, oder beliebige Kombinationen der oben genannten Merkmale.

Die Fixierung des Kopplungselements erfolgt dadurch, dass das freie Ende der Gewindespindel in Achsrichtung, also in Richtung der Spindelachse, so ausgerichtet ist, dass die Spindelachse in der Plattenebene im Wesentlichen parallel zwischen den Armen angeordnet ist. Unter im Wesentlichen parallel ist stets eine Abweichung gegenüber einer idealen Parallelität von ±10° bezogen auf die Achsrichtung zu verstehen. Mit ihren gegeneinander gerichteten Innenseiten kontaktieren die Arme einander außen bezüglich der Spindelachse gegenüberliegende Mantelabschnitte der Gewindespindel. Zwischen den Armen ist die Gewindespindel fest eingespannt. Die Verbindung zwischen den Armen und der Gewindespindel kann kraft- und/oder stoff- und/oder formschlüssig sein, bevorzugt unlösbar, so dass ein fester Sitz und eine hohe Zug- und Biegefestigkeit gewährleistet werden kann.

Ein Vorteil der erfindungsgemäßen Gewindespindel ist die Möglichkeit einer rationellen Herstellung, wobei eine optimale, zur Achse fluchtende Ausrichtung des Koppelabschnitts mit der Gewindespindel dadurch möglich, dass die Arme vor der Fixierung entsprechend ausgerichtet werden. Durch die rationelle Fertigung und Montage des Kopplungselements kann der Herstellungsaufwand für die Gewindespindel entsprechend gering ausfallen. Dabei kann eine kompakte Bauweise und ein relativ geringes Gewicht realisiert werden. Ein weiterer Vorteil ist die hohe Steifigkeit in Richtung der Plattenebene. Die Biegesteifigkeit quer zur Plattenebene kann durch die Dicke des Kopplungselements vorgegeben werden, so dass durch beispielsweise durch eine Verringerung der Dicke eine gewünschte Flexibilität erreicht werden kann.

Es kann vorteilhaft sein, dass der Grundkörper eine Dicke hat, die kleiner ist als der Gewindenenndurchmesser des Außengewindes. Besonders bevorzugt kann die Dicke des Grundkörpers kleiner als der Kerndurchmesser des Außengewindes sein. Durch eine geringere Materialstärke des Blechs beim Stanzen des Grundkörpers kann eine rationelle Fertigung und ein relativ geringes Gewicht realisiert werden, Durch die Verbindung der Arme mit der Gewindespindel kann dennoch eine vorteilhaft hohe Steifigkeit realisiert werden.

Die Innenseiten der Arme können kraft- und/oder form- und/oder stoffschlüssig mit der Gewindespindel verbunden sein. Dadurch, dass die Arme außen auf dem Außengewinde fixiert sind, kann eine einfache Anpassung an unterschiedliche Längen von Gewindespindeln einfach dadurch erfolgen, dass der Gewindeabschnitt auf das jeweils erforderliche Maß abgelängt wird, und das Kopplungselement im Endabschnitt des Gewindes befestigt wird.

Die die Arme können quer zur Achsrichtung auf der Gewindespindel verspannt sein. Hierzu kann der Abstand der Innenseiten der Arme vor der Montage Untermaß relativ zum Außendurchmesser des Außengewindes, also dem Gewindenenndurchmesser haben. Wird das Außengewinde zur Montage zwischen die Arme eingesetzt, werden diese elastisch auseinander gebogen, so dass die Gewindespindel durch die auftretenden Rückstellkräfte elastisch zwischen den Armen eingespannt ist. Auf diese Weise kann einfach eine kraftschlüssige Verbindung geschaffen werden, wodurch eine exakte relative Ausrichtung für ein gegebenenfalls anschließend ausgeübtes unlösbares Befestigungsverfahren vereinfacht wird.

Es kann vorteilhaft sein, dass die Arme mindestens ein in das Außengewinde formschlüssig eingreifendes Formschlusselement aufweisen. Dadurch, dass ein oder eine Mehrzahl von Formschlusselementen, die bevorzugt an die Gewindegänge des Außengewindes angepasst sein können, auf der Innenseite bevorzugt beider Arme angeordnet ist, kann beim Einbringen der Gewindespindel zwischen die Arne einfach ein in Achsrichtung wirksamer Formschluss erzeugt werden. Das oder die Formschlusselemente können einfach einstückig mit dem Kopplungselement erzeugt werden, beispielsweise durch Stanzen oder Feinschneiden aus einem Blechabschnitt.

Gemäß dem erfindungsgemäßen Verfahren nach Anspruch 16 ist vorgesehen, dass die Arme plastisch in das Außengewinde eingepresst sind. Dadurch, dass radial von außen eine hinreichend hohe Presskraft ausgeübt wird, werden die Arme von außen in das Gewindeprofil dauerhaft plastisch eingeformt. Dadurch kann zwischen den Armen und der Gewindespindel ein in Umfangsrichtung wirksamer Formschluss erzeugt werden. Das Einpressen kann mit geringem Fertigungsaufwand erfolgen, und es wird eine besonders haltbare, drehfeste und biegesteife Verbindung erzeugt.

Es kann vorgesehen sein, dass ein die Arme abstützendes Fixierelement an dem Kopplungselement angebracht ist. Das Fixierelement kann beispielsweise einen die Arme umgreifenden Haltering umfassen, wie weiter oben beschrieben. Der Haltering kann an dem Kopplungselement im Bereich des Aufnahmeabschnitts angebracht sein, vorzugsweise koaxial zur Spindelachse, so dass er die Arme von außen umschließt und radial nach außen abstützt. Dadurch kann ein ungewolltes Aufspreizen der Arme wirksam verhindert werden. Bevorzugt liegt der Haltering mit seinem Innenumfang von außen an den Armen an, als ein Art Klemm- oder Spannring, so dass eine Abstützung in radialer Richtung bezogen auf die Achse ermöglicht wird. Dadurch kann der Haltering die Arme gegen das dazwischen eingespannte Außengewinde der Gewindespindel radial halten und abstützen. Durch das Fixierelement kann zwischen den Armen und der Gewindespindel eine dauerhaft hohe Haltekraft erzeugt werden, wodurch die Festigkeit einer Form- und/oder Kraftschluss-Verbindung und auch die Steifigkeit von Gewindespindel und Kopplungselement erhöht wird.

Durch das Fixierelement und gegebenenfalls weitere Spannmittel, kann die Gewindespindel fest zwischen den Armen eingespannt sein. Durch stoffschlüssige Verbindung, beispielsweise durch Verschweißen, und/oder formschlüssiges plastisches Verpressen kann eine belastbare, unlösbare Verbindung erzeugt werden, wie oben beschrieben.

Bei einem Spindeltrieb für einen Verstellantrieb zur Verstellung einer Lenksäule, umfassend eine drehend antreibbare Spindelmutter, in die ein System gemäß einem der Ansprüche 8 bis 12 eingreift.

Das Kopplungselement kann nach zumindest einer der oben bereits dargestellten vorteilhaften Weiterbildungen ausgebildet sein. Somit ist das Kopplungselement nach einem der Ansprüche 1 bis 8 ausgebildet.

Die Gewindespindel und das Kopplungselement können einzelne oder beliebige Kombinationen der oben beschriebenen erfindungsgemäßen Merkmale aufweisen. Dadurch können die jeweiligen Vorteile auch in einem erfindungsgemäßen Spindeltrieb realisiert werden. Insbesondere können der Fertigungsaufwand, das Gewicht und der Bauraum reduziert werden. Gleichzeitig kann eine vorteilhaft hohe Steifigkeit realisiert werden.

Bei einer Lenksäule für ein Kraftfahrzeug, mit einer Trageinheit, die an einer Fahrzeugkarosserie anbringbar ist, und von der eine Stelleinheit gehalten ist, in der eine Lenkspindel dreh-bar gelagert ist, und mit einem Verstellantrieb, der zwischen der Trageinheit und der Stelleinheit angeordnet ist, und von dem die Stelleinheit relativ zur Trageinheit verstellbar ist, wobei der Verstellantrieb als Spindeltrieb nach Anspruch 13 ausgebildet ist.

Der Spindeltrieb des oder der Verstellantriebe, die Gewindespindel und das Kopplungselement können einzelne oder beliebige Kombinationen der oben beschriebenen erfindungsgemäßen Merkmale aufweisen. Dadurch können die jeweiligen Vorteile auch in einer erfindungsgemäßen Lenksäule realisiert werden. Insbesondere können der Fertigungsaufwand, das Gewicht und der Bauraum reduziert werden. Gleichzeitig kann eine vorteilhaft hohe Steifigkeit realisiert werden.

Ein Verfahren zur Herstellung einer Gewindespindel für einen Spindeltrieb, die sich in einer Achsrichtung erstreckt und ein Außengewinde aufweist, an der ein Kopplungselement mit einem Aufnahmeabschnitt angebracht ist, welches einen Koppelabschnitt zur Verbindung mit einer Lenksäule aufweist, wobei der Koppelabschnitt und der Aufnahmeabschnitt in der Achsrichtung ausgerichtet sind, umfasst erfindungsgemäß die Schritte:
- Bereitstellen eines Kopplungselements, welches einen plattenförmigen Grundkörper umfassend den Aufnahmeabschnitt und den Koppelabschnitt aufweist, wobei der Aufnahmeabschnitt zwei Arme aufweist, die sich in Achsrichtung von dem Koppelabschnitt erstrecken, mit einander quer zur Achsrichtung gegenüberliegenden Innenseiten,
- Anordnen und Ausrichten des freien Endes der Gewindespindel koaxial zwischen den Armen,
- Verbinden der Arme mit der Gewindespindel, wobei die Arme plastisch in das Außengewinde eingeformt werden.

Das Kopplungselement ist bevorzugt wie oben beschrieben ausgestaltet, wobei es einzelne oder beliebige Kombinationen der oben beschriebenen erfindungsgemäßen Merkmale aufweisen kann.

Nach dem Einsetzen der Gewindespindel zwischen die Arme, beispielsweise mit einem Außengewinde, kann der Koppelabschnitt mit der Spindelachse fluchtend ausgerichtet werden. Dabei kann das Außengewinde bereits kraftschlüssig zwischen den Armen eingespannt sein. Eine dauerhafte Verbindung kann anschließend durch die oben beschriebenen Verfahren erzeugt werden, beispielsweise durch Verschweißen und/oder plastisches Verpressen. Es können beispielsweise durch Ausübung einer radialen Presskraft die Arme plastisch in das Außengewinde eingeformt werden. Dadurch kann wie oben beschrieben ein in Umfangsrichtung und/oder Achsrichtung wirksamer Formschluss erzeugt werden.

Es kann zusätzlich oder alternativ ein die Arme abstützendes Fixierelement an dem Aufnahmeabschnitt angebracht werden, wie oben beschrieben.

Im Vergleich zu bekannten Verfahren erfordert das erfindungsgemäße Verfahren einen geringeren Aufwand.

Es ist vorteilhaft, dass der Querabstand zwischen den Innenseiten der Arme zumindest abschnittweise kleiner ist als der Gewindenenndurchmesser, und die Gewindespindel elastisch zwischen den Armen eingespannt wird. Durch elastisches Aufbiegen beim Einsetzen der Gewindespindel kann einfach eine vorläufige Fixierung realisiert werden.

Das Kopplungselement kann Stahl, Aluminiumlegierungen, Buntmetall, wie beispielsweise Messing, Bronze, Rotguss oder dergleichen, und zusätzlich oder alternativ ein Kunststoffmaterial aufweisen. Durch die Wahl des Materials können unterschiedliche materialspezifische Eigenschaften für die Funktion des erfindungsgemäßen Kopplungselements genutzt werden, um dieses funktional zu optimieren. Beispielsweise können durch die plastische und elastische Verformbarkeit die Haltewirkung auf der Gewindespindel und/oder das Anschlagverhalten eingestellt werden.

Der Koppelabschnitt eines aus einem thermoplastischen Kunststoff gebildeten Kopplungselements kann thermisch mittels Warmumformen oder Heißpressen geformt werden. Alternativ kann dies auch mittels Ultraschallerwärmen mittels einer Sonotrode erfolgen. Mittels thermischer Fügeverfahren kann aus Kunststoff gebildetes Kopplungselement stoffschlüssig auf der Gewindespindel fixiert werden, beispielsweise mittels Ultraschall- oder Reibschwei-ßen.

Bevorzugt kann das Kopplungselement ein elastisches Element umfassen. Das elastische Element kann durch Einsatz elastisch verformbaren Materials erreicht werden, wie einem Elastomer, Kunststoff oder einem Kork. Beispielsweise kann ein gummiartig verformbares Elastomer eingesetzt werden. Dadurch kann eine Dämpfung beim Anschlagen des Kopplungselements an einem Gegenanschlag zur Begrenzung des Verstellwegs realisiert werden. Das elastische Material kann abschnittweise aufgebracht sein, beispielsweise als Beschichtung oder angefügter Anschlagkörper. Beispielsweise kann das Kopplungselement einen metallischen Grundkörper, der den Aufnahmeabschnitt und den Koppelabschnitt umfasst, aufweisen, der mit einem elastischen Anteil aus einem weicheren Kunststoff- oder Gummimaterial verbunden ist, beispielsweise einer durchgehenden oder partiellen Beschichtung.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Darstellung einer Lenksäule mit einer motorischen Verstellung,
- Figur 2: einen Verstellantrieb der Lenksäule gemäß Figur 1 in separater Darstellung,
- Figur 3: eine vergrößerte Teilansicht der Gewindespindel aus Figur 2,
- Figur 4: einen teilweisen Längsschnitt durch den in Figur 3 gezeigten Teilabschnitt der Gewindespindel,
- Figur 4a: eine schematisierte Detaildarstellung des Gewindes der Gewindespindel und des Arms des Kopplungselements,
- Figur 5: das Kopplungselement gemäß Figur 4 in einer separaten Ansicht,
- Figur 6: eine schematische perspektivische Ansicht einer zweiten Ausführung einer Gewindespindel für einen Verstellantrieb gemäß Figur 2,
- Figur 7: einen teilweisen Längsschnitt durch einen Teilabschnitt der Gewindespindel gemäß Figur 6,
- Figur 8: das Kopplungselement gemäß Figur 7 in einer schematischen perspektivischen Teilansicht,
- Figur 9: eine vergrößerte Detaildarstellung Kopplungselement gemäß Figuren 7 und 8 in einer separaten Ansicht,
- Figur 10: eine vergrößerte Teilansicht der Gewindespindel in einer alternativen Ausführungsform ähnlich Figur 3.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

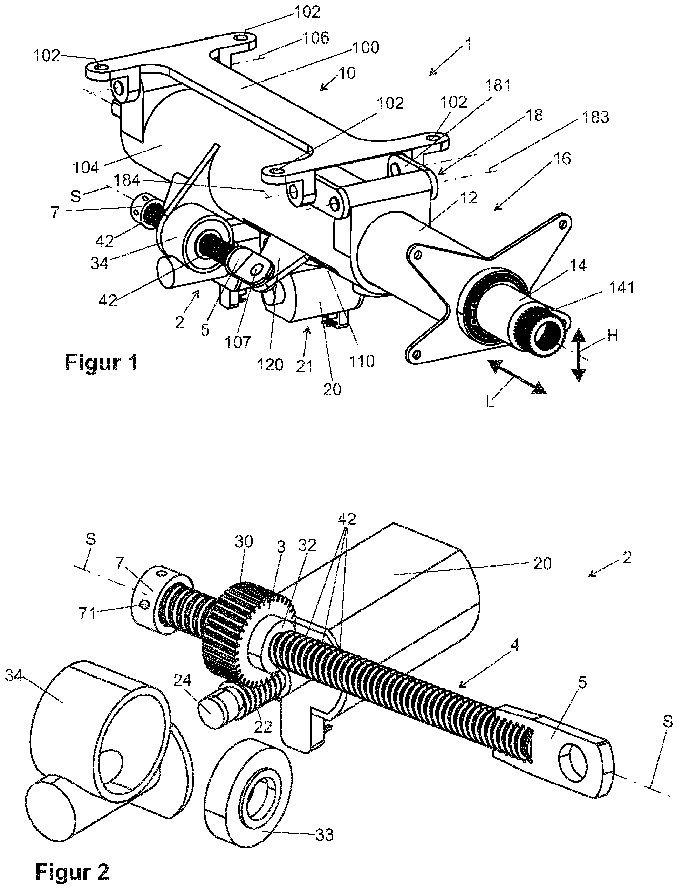

Figur 1 zeigt eine Lenksäule 1, welche eine mit dem Chassis eines hier nicht gezeigten Kraftfahrzeugs verbindbare Trageinheit 10 aufweist, an welcher eine Stelleinheit 16 verstellbar gehalten ist, und zwar in Längsrichtung in Richtung der Längsachse L und in Höhenrichtung H quer dazu in senkrechter Richtung, wie mit den Doppelpfeilen angedeutet ist. Die Trageinheit 10 umfasst eine Konsole 100, welche am Chassis des Kraftfahrzeugs, beispielsweise über Befestigungsmittel 102, beispielsweise Befestigungsbohrungen, befestigt werden kann.

Die Stelleinheit 16 umfasst ein Mantelrohr 12, in welchem eine Lenkspindel 14 drehbar gelagert ist. Am lenkradseitigen Ende der Lenkspindel 14 befindet sich ein Anschlussabschnitt 141, an dem ein hier nicht gezeigtes Lenkrad befestigt werden kann. Die Lenkspindel 14 dient dazu, ein von einem Fahrer über das Lenkrad eingebrachtes Lenkmoment in bekannter Weise auf ein hier nicht gezeigtes lenkbares Rad zu übertragen. Die Lenkspindel 14 kann dabei die Lenkbewegung von dem Lenkrad auf das lenkbare Rad unter Zwischenschaltung eines Lenkgetriebes, gegebenenfalls unter Zuhilfenahme einer Hilfskraftunterstützung, übertragen.

In einer Variante kann die Lenkbewegung von der Lenkspindel 14 auch sensorisch, beispielsweise elektrisch, elektronisch oder magnetisch, abgetastet werden, und das dabei gewonnene Signal in eine Steuerung eingespeist werden, welche unter Zuhilfenahme einer Lenkeinrichtung eine Verschwenkung des lenkbaren Rades zur Darstellung der Lenkbewegung ausführt. Derartige Systeme sind als Steer-by-Wire-Lenksysteme bekannt.

Das Mantelrohr 12 ist in einer Manteleinheit 104 in Richtung der Längsachse L, das ist die sogenannte Längsverstellrichtung, verschiebbar gehalten. Durch eine teleskopartige Verstellung des Mantelrohrs 12 gegenüber der Manteleinheit 104 kann entsprechend eine Längsverstellung der Lenkspindel 14 und damit des nicht dargestellten Lenkrades zur Anpassung der Position des Lenkrades an die Sitzposition eines Fahrers des Kraftfahrzeugs erreicht werden.

Die Manteleinheit 104 ist verschwenkbar an einer Trageinheit 10, auch als Konsole bezeichnet, befestigt und kann relativ zu dieser um eine horizontale Schwenkachse 106 verschwenkt werden. Eine Höhenverstellbarkeit der Stelleinheit 16 in der Höhenrichtung H, das ist die Höhenverstellrichtung, die im Wesentlichen senkrecht zur Längsrichtung L orientiert ist, wird darüber ermöglicht, dass das Mantelrohr 12 über einen Verschwenkmechanismus 18 an der Konsole 100 gehalten ist. Damit ergibt sich eine Verschwenkbarkeit des Mantelrohrs 12 und der Lenkspindel 14 gegenüber der Trageinheit 10 und insbesondere gegenüber der Konsole 100 um die Schwenkachse 106 derart, dass auch eine Höhenverstellung des hier nicht gezeigten und an der Lenkspindel 14 angeordneten Lenkrades erreicht wird, um auch auf diese Weise eine Anpassung der Position des Lenkrades an die Sitzposition des Fahrers zu erreichen.

Im Ausführungsbeispiel ist für jede der beiden Verstellrichtungen ein separater Verstellantrieb 2, 21 vorgesehen. Die Verstellantriebe 2 und 21 können im Prinzip gleichartig aufgebaut sein. Zur Erläuterung des Aufbaus und der Funktion wird daher im Folgenden nur auf den Verstellantrieb 2 Bezug genommen, mittels welchem eine Längsverstellung der Stelleinheit 16 gegenüber der Trageinheit 10 in Längsrichtung L erfolgen kann, wobei auch der andere Verstellantrieb 21 umfasst ist.

Figur 2 zeigt eine auseinander gezogene Darstellung des Verstellantriebs 2. Dieser umfasst einen Spindeltrieb mit einer Spindelmutter 3 und einer Gewindespindel 4, die einen Gewindeabschnitt 40 mit einem Außengewinde 42 aufweist, der in ein passendes Innengewinde 32 der Spindelmutter 3 eingeschraubt ist. Die Spindelmutter 3 ist drehbar, aber in Richtung der Spindelachse S, die auch kurz als Achsrichtung oder Spindelrichtung bezeichnet wird, ortsfest bezüglich der Manteleinheit 104 in einem Getriebegehäuse 34 gelagert. Durch den Gewindeeingriff führt eine Drehung der Spindelmutter 3 relativ zur Gewindespindel 4 zu einer Axialbewegung der Gewindespindel 4 relativ zur Spindelmutter 3 in Spindelrichtung.

Dadurch, dass die Spindelmutter 3 (über das Getriebegehäuse 34) an der Manteleinheit 104 abgestützt ist, und das freie Ende der Gewindespindel 4 über den Anlenkelement 120 an dem Mantelrohr 12 angreift, kann durch eine Drehung der Spindelmutter 3 eine Relativbewegung zwischen Mantelrohr 12 und Manteleinheit 104 erzeugt werden, so dass eine Verstellung der Position der Stelleinheit 16 gegenüber der Trageinheit 10 bewirkt wird.

Zum motorischen Antrieb der Verstellung ist die Spindelmutter 3 relativ zum Getriebegehäuse 34 und damit auch relativ zur Gewindespindel 4 drehend antreibbar. Hierzu dient ein Antriebsmotor 20, auf dessen Abtriebswelle 24 eine Schnecke 22 angeordnet ist. Die Schnecke 22 greift in eine Außenverzahnung 30 der Spindelmutter 3 ein, die außen als Schneckenrad ausgebildet ist. Die Spindelmutter 3 ist in einem Lager 33 in dem Getriebegehäuse 34 um die Spindelachse S drehbar gelagert. Die Rotationsachse der Schnecke 22 und die Spindelachse S der Spindelmutter 3 stehen üblicherweise senkrecht aufeinander, wie es von Schneckengetrieben an sich bekannt ist.

Zur Verbindung mit dem Anlenkelement 120 des Mantelrohrs 12 ist an dem freien Ende der Gewindespindel 4 an dem Gewindeabschnitt 40 ein erfindungsgemäßes Kopplungselement 5 fest angebracht. Das Kopplungselement 5 ist über ein Befestigungselement 107, das als Gelenkbolzen ausgebildet ist, mit dem Anlenkelement 120 verbunden, der in einem Schlitz 110 in der Manteleinheit 104 in Längsrichtung verschiebbar geführt, so dass eine Verschiebung des Anlenkelements 120 gegenüber der Manteleinheit 104 zu einer Verschiebung der Stelleinheit 16 gegenüber der Trageinheit 10 in Längsrichtung L führt.

Am anderen, dem Kopplungselement 5 abgewandten Ende des Gewindeabschnitts 40 ist ein Anschlagelement 7 fest auf der Gewindespindel 4 angebracht, welches durch partielle plastische Deformationen in Form von Einformungen 71 die mittels Heiß- bzw. Warmverstemmen eingebracht sind, auf der Gewindespindel 4 fixiert sein kann. Das Anschlagelement 7 kann aus einem Kunststoff, oder aus einem metallischen Werkstoff gebildet sein, welches durch partielle plastische Deformationen auf der Gewindespindel 4 fixiert sein kann.

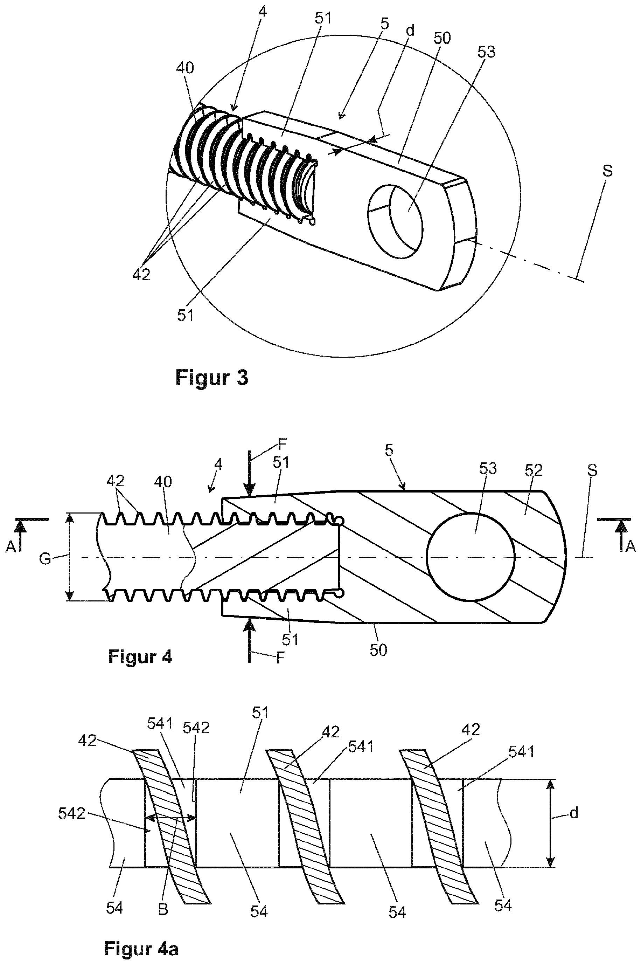

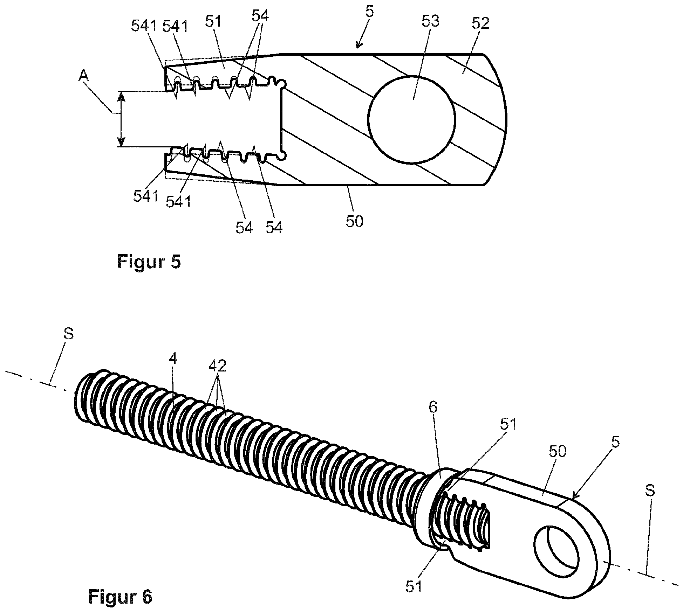

Das Kopplungselement 5 ist auf dem Gewindeabschnitt 40 fest montiert und perspektivisch in Figur 3 und im Längsschnitt entlang der Spindelachse S in Figur 4 dargestellt. Figur 4a zeigt eine schematisierte Detailschnittdarstellung des Außengewindes 42 der Gewindespindel 4 und des Arms 51 des Kopplungselements 5 gemäß der Schnittlinie A-A in der Figur 4. Figur 5 zeigt das Kopplungselement 5 einzeln vor der Montage.

Das Kopplungselement 5 hat einen plattenförmigen Grundkörper 50, der plan ausgebildet ist und sich in einer Plattenebene im Wesentlichen parallel zur Spindelachse S erstreckt und bevorzugt eine im wesentlichen gleichbleibende Dicke d hat, wie in Figur 3 erkennbar ist. Bevorzugt kann der Grundkörper 50 als Stanz- oder Feinschneidteil aus Blech gefertigt sein. Dabei ist die Dicke d kleiner als der Gewindenenndurchmesser G des Außengewindes 42, der in Figur 4 eingezeichnet ist, bevorzugt kleiner als der 0,5-fache (=halbe) Gewindenenndurchmesser G. Ein Aufnahmeabschnitt des Grundkörpers 50 weist zwei Arme 51 auf, die sich in Spindelrichtung von einem Koppelabschnitt 52 erstrecken.

Der Koppelabschnitt 52 weist als Verbindungsmittel eine quer zur Spindelachse S, senkrecht zur Plattenebene des Grundkörpers 50 durchgehende Bohrung 53 auf, in welcher das als Gelenkbolzen ausgebildete Befestigungselement 107 gelenkig aufnehmbar ist.

In montiertem Zustand ist der Endbereich des Gewindeabschnitts 40 zwischen den beiden Armen 51 fixiert, wobei die radial gegeneinander gerichteten Innenseiten der Arme 51 bezüglich der Spindelachse S einander diametral gegenüberliegen, und außen an dem Außengewinde 42 befestigt sind.

Auf ihren Innenseiten weisen die Arme 51 radial nach innen vorstehende Formschlusselemente 54 auf, zwischen denen Ausnehmungen 541 angeordnet sind. Diese sind bevorzugt so angeordnet, dass sie formschlüssig in den Gewindegang oder die Gewindegänge des Außengewindes 42 eingreifen können, zur Bildung einer in Spindelrichtung wirksamen Formschlussverbindung. Das Außengewinde 42 weist zumindest einen Gewindezahn auf bzw. ist durch diesen gebildet. Der Gewindegang 42 greift in die Ausnehmungen 541 ein, wobei die Ausnehmungen 541 einen Abstand zueinander aufweisen, welches mit der Steigung des Außengewindes 42 korrespondiert. Dies ist in Figur 4 und Figur 4a gut erkennbar. Die Ausnehmungen 541 sind so breit ausgebildet, dass die die Ausnehmung 541 begrenzende Flanke 542 des Formschlusselements 54 an dem Außengewinde 42 bzw. dem Gewindezahn des Außengewindes 42 anliegen und das Außengewinde 42 bei der Montage elastisch verformt wird, so dass eine Vorspannung bereitgestellt ist. Dabei ist die Breite B der Ausnehmung derart bemessen, dass diese kleiner ist als die Steigungshöhe des Gewindezahns bezogen auf die Dicke d des Kopplungselements 5.

Zur Fixierung kann das Kopplungselement 5 dadurch auf dem Gewindeabschnitt 40 verspannt werden, dass die Innenseiten der Arme 51 im unmontierten Zustand, der in Figur 5 gezeigt ist, einen parallel zur Plattenebene des Grundkörpers 50 gemessenen Abstand A haben, der kleiner ist als der außen über das Außengewinde 42 gemessene Gewindenenndurchmesser G. Bei der Montage werden die Arme 51 in die in Figur 5 gestrichelt eingezeichnete Stellung auseinander gespreizt. Durch die elastischen Rückstellkräfte ist dann das Außengewinde 42 dazwischen eingespannt und stellt somit eine Vorspannkraft F zwischen den Armen 51 und der Gewindespindel bereit.

Zur unlösbaren Fixierung können die Arme 51 mittels einer radial von außen aufgebrachten Presskraft F, wie in Figur 4 schematisch eingezeichnet, von außen derart in den Gewindeabschnitt 40 eingepresst werden, dass durch plastische Verformung ein Formschluss gebildet wird, der das Kopplungselement 5 zug- und drehfest an dem Gewindeabschnitt 4 festlegt. Diese Presskraft F ist optional, es ist ebenfalls möglich, dass nur die durch die aufgespreizten Arme 51 bereitgestellte elastische Rückfederkraft die Vorspannkraft bereitstellt.

Vorteilhaft ist, dass der Grundkörper 50 des Kopplungselements 5 durch elastische Aufbiegung der Arme 51 zunächst kraftschlüssig auf dem Außengewinde angebracht werden kann, wobei durch die flache, plattenförmige Ausgestaltung noch eine Ausrichtung vorgenommen werden kann, so dass der Montageabschnitt 52 mit der Spindelachse S fluchtet. Danach kann durch das vorgenannte plastische Verpressen eine dauerhafte, unlösbare Verbindung erzeugt werden, gegebenenfalls auch alternativ mittels stoffschlüssiger Verbindung wie Verschweißen oder dergleichen.

Die in den Figuren 6, 7, 8 und 9 dargestellte zweite Ausführung der Erfindung weist im Prinzip dieselben funktionalen Elemente auf wie die erste Ausführung, wobei entsprechend dieselben Bezugszeichen verwendet werden.

Zusätzlich ist ein Fixierelement 6 vorgesehen, welches einen die Arme 51 von außen umgreifenden Haltering umfasst. Das Fixierelement 6 kann wie dargestellt als im Wesentlichen kreisrunder Ring ausgebildet sein, der konzentrisch zur Spindelachse S angeordnet ist.

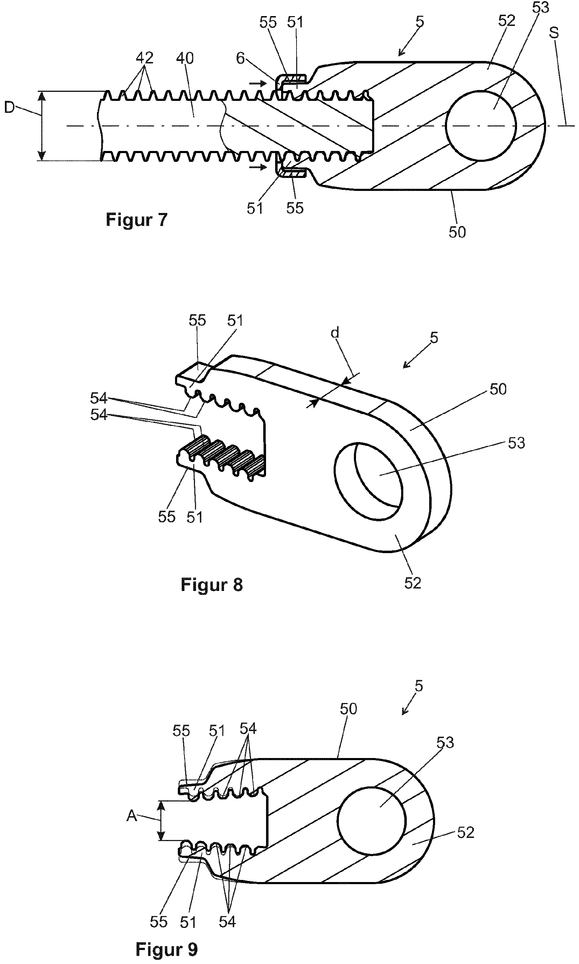

Die Arme 51 weisen außen Anlageflächen 55 auf, die in montiertem Zustand innen an dem Fixierelement 6 anliegen, oder zumindest ein ungewolltes Aufbiegen der Arme 51 nach au-ßen verhindern. Das Fixierelement 6 kann in axialer Richtung auf die freien Enden der Arme 51 aufgesetzt oder aufgepresst werden, wie dies in Figur 7 mit den Pfeilen angedeutet ist.

Das Fixierelement 6 kann bevorzugt geschlossen ringförmig ausgebildet sein, bevorzugt als Stanz-Press-Teil aus Stahl- oder Federstahlblech. Durch das Fixierelement 6 kann eine radiale Abstützung der Arme 51 bereitgestellt werden. Es ist auch denkbar und möglich, dass die Anlageflächen 55 zu den freien Enden der Arme 51 hin keilförmig oder konisch zusammenlaufen, so dass beim Aufpressen des Fixierelements 6 die Arme 51 radial gegeneinander zusammengedrückt werden. Durch einen flachen Keilwinkel kann eine selbsthaltende, unlösbare Verbindung des Fixierelements 6 mit dem Grundkörper 50 erzeugt werden. Gegebenenfalls können zusätzlich oder alternativ weitere kraft- und/oder stoffschlüssige Verbindungen realisiert werden.

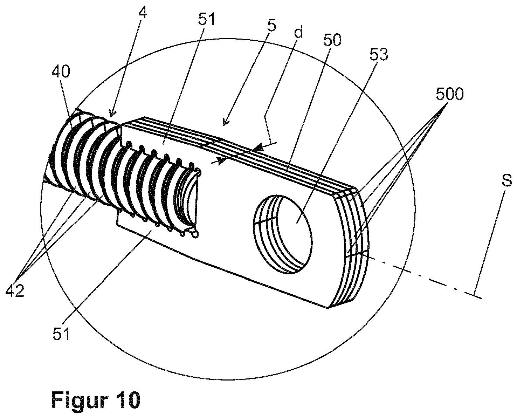

In der Figur 10 ist eine vergrößerte Teilansicht der Gewindespindel in einer alternativen Ausführungsform ähnlich Figur 3 dargestellt. Das Kopplungselement 5 weist einen lamellaren schichtartigen Aufbau auf und ist aus einzelnen deckungsgleichen Lamellen in Form von Platinen 500 gebildet, die miteinander verbunden sind und das Kopplungselement 5 mit einer Dicke d bilden. Die Platinen 500 sind bevorzugt aus einem Blech gebildet und bevorzugt durch Stanzen gebildet. Die Platinen 500 sind mittels einer stoffschlüssigen Verbindung wie Kleben, Schweißen oder Löten miteinander verbunden. Alternativ oder zusätzlich können diese durch eine formschlüssige Verbindung miteinander verbunden sein, wie beispielsweise mittels Durchsetzfügen. Bevorzugt sind die Platinen 500 alle von gleicher Dicke.

### Bezugszeichenliste

- 1: Lenksäule
- 10: Trageinheit
- 12: Mantelrohr
- 14: Lenkspindel
- 141: lenkradseitiges Ende
- 16: Stelleinheit
- 18: Verschwenkmechanismus
- 100: Trageinheit
- 102: Befestigungsmittel
- 104: Manteleinheit
- 106: Schwenkachse
- 107: Befestigungselement
- 110: Schlitz
- 120: Anlenkhebel / Anlenkelement
- 141: Anschlussabschnitt
- 181: Stellhebel
- 182: Gelenk
- 183: Gelenkachse
- 184: Gelenkachse
- 2, 21: Verstellantrieb
- 20: Antriebsmotor
- 22: Schnecke
- 24: Abtriebswelle
- 3: Spindelmutter
- 30: Außenverzahnung
- 32: Innengewinde
- 33: Lager
- 34: Getriebegehäuse
- 4: Gewindespindel
- 40: Gewindeabschnitt
- 42: Außengewinde
- 5: Kopplungselement
- 50: Grundkörper
- 51: Arme
- 52: Montageabschnitt
- 53: Bohrung
- 54: Formschlusselemente
- 55: Anlageflächen
- 6: Fixierelement
- 7: Anschlagelement
- 71: Deformationen
- L: Längsachse
- H: Höhenrichtung
- S: Spindelachse
- d: Dicke
- G: Gewindenenndurchmesser
- A: Abstand
- F: Presskraft

## Patentansprüche

1. Kopplungselement (5), das einen Aufnahmeabschnitt zur Anbringung an einer Gewindespindel (4) und einen Koppelabschnitt (52) zur Verbindung mit einer Lenksäule aufweist, wobei der Koppelabschnitt (52) und der Aufnahmeabschnitt in einer Achsrichtung ausgerichtet sind,
wobei ein plattenförmiger Grundkörper (50) den Aufnahmeabschnitt und den Koppelabschnitt (52) aufweist, **dadurch gekennzeichnet, dass** der Aufnahmeabschnitt zwei Arme (51) aufweist, die sich in Achsrichtung von dem Koppelabschnitt (52) erstrecken, mit einander quer zur Achsrichtung gegenüberliegenden Innenseiten, wobei zumindest ein Arm (51) mindestens ein von seiner Innenseite vorstehendes Formschlusselement (54) aufweist.

2. Kopplungselement (5) nach Anspruch 1, **dadurch gekennzeichnet, dass** der Grundkörper (50) einstückig ausgebildet ist.

3. Kopplungselement (5) nach einem der vorangehenden Ansprüche, dass der Grundkörper (50) plan ausgebildet ist.

4. Kopplungselement (5) nach einem der vorangehenden Ansprüche, **dadurch gekennzeichnet, dass** der Grundkörper (50) eine Dicke (d) hat, die kleiner ist als der Querabstand (A) zwischen den Innenseiten der Arme (51).

5. Kopplungselement (5) nach einem der vorangehenden Ansprüche, **dadurch gekennzeichnet, dass** ein Fixierelement (6) mit dem Aufnahmeabschnitt verbindbar ist, welches an den Armen (51) angreift und quer zur Achsrichtung abstützt.

6. Kopplungselement (5) nach Anspruch 5, **dadurch gekennzeichnet, dass** das Fixierelement (6) einen die Arme (51) umgreifenden Haltering umfasst.

7. Kopplungselement (5) nach Anspruch 5 oder 6, **dadurch gekennzeichnet, dass** das Fixierelement (6) und der Aufnahmeabschnitt miteinander zusammenwirkende Spannmittel (55) aufweisen.

8. System mit einer Gewindespindel (4) und einem Kopplungselement (5) nach einem der Ansprüche 1 bis 7, **dadurch gekennzeichnet, dass** die Gewindespindel (4) für einen Spindeltrieb (2) für eine Lenksäule ist und dass die Gewindespindel (4) sich in einer Achsrichtung erstreckt und ein Außengewinde (42) aufweist, an der das Kopplungselement (5) mit dem Aufnahmeabschnitt angebracht ist, wobei die Arme (51) plastisch in das Außengewinde (42) eingepresst sind.

9. System nach Anspruch 8, **dadurch gekennzeichnet, dass** der Grundkörper (50) eine Dicke (d) aufweist, die kleiner gleich dem Gewindenenndurchmesser (G) eines Außengewindes (42) der Gewindespindel (4) ist.

10. System nach einem der vorangehenden Ansprüche 8 bis 9, **dadurch gekennzeichnet, dass** die Arme (51) quer zur Achsrichtung auf der Gewindespindel (4) verspannt sind.

11. System nach einem der vorangehenden Ansprüche 8 bis 10, **dadurch gekennzeichnet, dass** die Arme (51) mindestens eines der formschlüssigen Elemente (54) in das Außengewinde (42) aufweisen.

12. System nach einem der vorangehenden Ansprüche 8 bis 11, **dadurch gekennzeichnet, dass** ein die Arme (52) abstützendes Fixierelement (6) an dem Kopplungselement (5) angebracht ist.

13. Spindeltrieb (2) für einen Verstellantrieb zur Verstellung einer Lenksäule (1), umfassend eine drehend antreibbare Spindelmutter (3), in die ein System nach einem der Ansprüche 8 bis 12 eingreift.

14. Lenksäule (1) für ein Kraftfahrzeug, mit einer Trageinheit (10), die an einer Fahrzeugkarosserie anbringbar ist, und von der eine Stelleinheit (16) gehalten ist, in der eine Lenkspindel (14) drehbar gelagert ist, und mit mindestens einem Verstellantrieb (2, 21), der zwischen der Trageinheit (10) und der Stelleinheit (16) angeordnet ist, und von dem die Stelleinheit (16) relativ zur Trageinheit (10) verstellbar ist, wobei mindestens einer der Verstellantriebe (2) als Spindeltrieb nach Anspruch 13 ausgebildet ist.

15. Kopplungselement (5) nach einem der vorangehenden Ansprüche 1 bis 7 **dadurch gekennzeichnet, dass** ein Funktionselement einer Energieabsorptionseinrichtung einstückig mit dem Kopplungselement (5) ausgebildet ist.

16. Verfahren zur Herstellung einer Gewindespindel (4) für einen Spindeltrieb (2), die sich in einer Achsrichtung erstreckt und ein Außengewinde (42) aufweist, an der ein Kopplungselement (5) mit einem Aufnahmeabschnitt angebracht ist, welches einen Koppelabschnitt (52) zur Verbindung mit einer Lenksäule aufweist, wobei der Koppelabschnitt (52) und der Aufnahmeabschnitt in der Achsrichtung ausgerichtet sind, mit den folgenden Schritten:
- Bereitstellen eines Kopplungselements (5), welches einen plattenförmigen Grundkörper (50) umfassend den Aufnahmeabschnitt und den Koppelabschnitt (52) aufweist, wobei der Aufnahmeabschnitt zwei Arme (51) aufweist, die sich in Achsrichtung von dem Koppelabschnitt (52) erstrecken, mit einander quer zur Achsrichtung gegenüberliegenden Innenseiten,
- Anordnen und Ausrichten des freien Endes der Gewindespindel (4) koaxial zwischen den Armen (51),
- Verbinden der Arme (51) mit der Gewindespindel (4), wobei die Arme (51) plastisch in das Außengewinde (42) eingeformt werden.

17. Verfahren nach Anspruch 16, **dadurch gekennzeichnet, dass** der Querabstand (A) zwischen den Innenseiten der Arme (51) zumindest abschnittweise kleiner ist als der Gewindenenndurchmesser (G), und die Gewindespindel (4) elastisch zwischen den Armen (51) eingespannt wird.

18. Verfahren nach einem der Ansprüche 16 bis 17, **dadurch gekennzeichnet, dass** ein die Arme (51) abstützendes Fixierelement (6) an dem Grundkörper (50) angebracht wird.

## Claims

1. Coupling element (5) having a receiving portion for attachment to a threaded spindle (4) and a coupling portion (52) for connection to a steering column, the coupling portion (52) and the receiving portion being aligned in an axial direction,
wherein a plate-shaped base body (50) comprises said receiving portion and said coupling portion (52), **characterized in that** said receiving portion comprises two arms (51) extending in an axial direction from said coupling portion (52) with inner sides opposite to each other transversely to said axial direction, wherein at least one arm (51) comprises at least one positive locking member (54) projecting from its inner side.

2. Coupling element (5) according to claim 1, **characterized in that** the base body (50) is formed in one piece.

3. Coupling element (5) according to one of the preceding claims, in that the base body (50) is of planar design.

4. Coupling element (5) according to one of the preceding claims, **characterized in that** the base body (50) has a thickness (d) which is smaller than the transverse distance (A) between the inner sides of the arms (51).

5. Coupling element (5) according to one of the preceding claims, **characterized in that** a fixing element (6) can be connected to the receiving section, which engages the arms (51) and supports them transversely to the axial direction.

6. Coupling element (5) according to claim 5, **characterized in that** the fixing element (6) comprises a retaining ring embracing the arms (51).

7. Coupling element (5) according to claim 5 or 6, **characterized in that** said fixing member (6) and said receiving portion comprise cooperating clamping means (55).

8. System comprising a threaded spindle (4) and a coupling member (5) according to one of the claims 1 to 7, **characterized in that** the threaded spindle (2) is for a spindle drive (2) for a steering column and that threaded spindle (4) extends in an axial direction and comprises an external thread (42) to which the coupling member (5) with the receiving portion is attached,
the arms (51) being plastically pressed into the external thread (42).

9. System according to claim 8, **characterized in that** the base body (50) has a thickness (d) which is less than or equal to the thread nominal diameter (G) of an external thread (42) of the threaded spindle (4).

10. System according to one of the preceding claims 8 to 9, **characterized in that** the arms (51) are braced on the threaded spindle (4) transversely to the axial direction.

11. System according to one of the preceding claims 8 to 10, **characterized in that** the arms (51) comprise at least one of the positive locking elements (54) engaging positively in the external thread (42).

12. System according to any one of the preceding claims 8 to 11, **characterized in that** a fixing element (6) supporting the arms (52) is attached to the coupling element (5).

13. Spindle drive (2) for an adjusting drive for adjusting a steering column (1), comprising a spindle nut (3) which can be driven in rotation and in which a system according to one of claims 8 to 12 engages.

14. Steering column (1) for a motor vehicle, having a support unit (10) which can be attached to a vehicle body and by which an actuating unit (16) is held, in which an actuating spindle (14) is rotatably mounted, and having at least one adjusting drive (2, 21) which is arranged between the support unit (10) and the actuating unit (16) and by which the actuating unit (16) can be adjusted relative to the support unit (10), at least one of the adjusting drives (2) being designed as a spindle drive according to claim 13.

15. Coupling element (5) according to one of the preceding claims 1 to 7, **characterized in that** a functional element of an energy absorption device is formed integrally with the coupling element (5).

16. A method of manufacturing a threaded spindle (4) for a spindle drive (2) extending in an axial direction and having an external thread (42), to which a coupling member (5) having a receiving portion is attached, the coupling member (5) having a coupling portion (52) for connection to a steering column, the coupling portion (52) and the receiving portion being aligned in the axial direction,
**with the following steps,**
- Providing a coupling member (5) having a plate-shaped base body (50) comprising said receiving portion and said coupling portion (52), said receiving portion having two arms (51) extending in an axial direction from said coupling portion (52) with inner sides opposite to each other transversely to said axial direction,
- Arrange and align the free end of the threaded spindle (4) coaxially between the arms (51),
- Connecting the arms (51) to the threaded spindle (4), whereby the arms (51) are plastically molded into the external thread (42).

17. Method according to claim 16, **characterized in that** the transverse distance (A) between the inner sides of the arms (51) is smaller than the thread nominal diameter (G), at least in sections, and the threaded spindle (4) is clamped elastically between the arms (51).

18. Method according to one of claims 16 to 17, **characterized in that** a fixing element (6) supporting the arms (51) is attached to the base body (50).

## Revendications

1. Élément de couplage (5) comportant une partie de réception pour la fixation à une broche filetée (4) et une partie de couplage (52) pour la connexion à une colonne de direction, la partie de couplage (52) et la partie de réception étant alignées dans une direction axiale,
dans lequel un corps de base en forme de plaque (50) comprend ladite partie de réception et ladite partie de couplage (52), **caractérisé en ce que** ladite partie de réception comprend deux bras (51) s'étendant dans une direction axiale à partir de ladite partie de couplage (52) avec des côtés intérieurs opposés l'un à l'autre transversalement à ladite direction axiale, dans lequel au moins un bras (51) comprend au moins un élément de verrouillage positif (54) faisant saillie à partir de son côté intérieur.

2. Elément de couplage (5) selon la revendication 1, **caractérisé par le fait que** le corps de base (50) est formé d'une seule pièce.

3. Elément de couplage (5) selon l'une des revendications précédentes, en ce que le corps de base (50) est de conception plane.

4. Elément de couplage (5) selon l'une des revendications précédentes, **caractérisé en ce que** le corps de base (50) a une épaisseur (d) qui est inférieure à la distance transversale (A) entre les côtés intérieurs des bras (51).

5. Elément de couplage (5) selon l'une des revendications précédentes, **caractérisé par le fait qu'**un élément de fixation (6) peut être connecté à la section de réception, qui engage les bras (51) et les soutient transversalement à la direction axiale.

6. Élément de couplage (5) selon la revendication 5, **caractérisé par le fait que** l'élément de fixation (6) comprend un anneau de retenue englobant les bras (51).

7. Élément de couplage (5) selon la revendication 5 ou 6, **caractérisé en ce que** ledit élément de fixation (6) et ladite partie réceptrice comprennent des moyens de serrage coopératifs (55).

8. Système comprenant une broche filetée (4) et un élément de couplage (5) selon l'une des revendications 1 à 7, **caractérisé en ce que** la broche filetée (2) est destinée à un entraînement de broche (2) pour une colonne de direction et que la broche filetée (4) s'étend dans une direction axiale et comprend un filetage extérieur (42) auquel l'élément de couplage (5) avec la partie réceptrice est fixé,
les bras (51) sont pressés plastiquement dans le filetage extérieur (42).

9. Système selon la revendication 8, **caractérisé par le fait que** le corps de base (50) a une épaisseur (d) qui est inférieure ou égale au diamètre nominal (G) d'un filet extérieur (42) de la broche filetée (4).

10. Système selon l'une des revendications précédentes 8 à 9, **caractérisé en ce que** les bras (51) sont contreventés sur la tige filetée (4) transversalement à la direction axiale.

11. Système selon l'une des revendications précédentes 8 à 10, **caractérisé en ce que** les bras (51) comprennent au moins un des éléments de verrouillage positif (54) s'engageant positivement dans le filetage extérieur (42).

12. Système selon l'une quelconque des revendications précédentes 8 à 11, **caractérisé par le fait qu'**un élément de fixation (6) supportant les bras (52) est fixé à l'élément de couplage (5).

13. Entraînement à broche (2) pour un entraînement de réglage d'une colonne de direction (1), comprenant un écrou à broche (3) pouvant être entraîné en rotation et dans lequel s'engage un système selon l'une des revendications 8 à 12.

14. Colonne de direction (1) pour un véhicule automobile, comportant une unité de support (10) qui peut être fixée à la carrosserie du véhicule et par laquelle une unité d'actionnement (16) est maintenue, dans laquelle une broche d'actionnement (14) est montée rotative, et comportant au moins un entraînement de réglage (2, 21) qui est disposé entre l'unité de support (10) et l'unité d'actionnement (16) et par lequel l'unité d'actionnement (16) peut être ajustée par rapport à l'unité de support (10), au moins un des entraînements de réglage (2) étant conçu comme un entraînement de broche conformément à la revendication 13.

15. Élément de couplage (5) selon l'une des revendications précédentes 1 à 7, **caractérisé par le fait qu'**un élément fonctionnel d'un dispositif d'absorption d'énergie est formé intégralement avec l'élément de couplage (5).

16. Procédé de fabrication d'une broche filetée (4) pour un entraînement de broche (2) s'étendant dans une direction axiale et ayant un filetage extérieur (42), auquel est fixé un élément de couplage (5) ayant une partie réceptrice, l'élément de couplage (5) ayant une partie de couplage (52) pour la connexion à une colonne de direction, la partie de couplage (52) et la partie réceptrice étant alignées dans la direction axiale, **avec les étapes suivantes,**
- Fournir un élément de couplage (5) ayant un corps de base en forme de plaque (50) comprenant ladite partie de réception et ladite partie de couplage (52), ladite partie de réception ayant deux bras (51) s'étendant dans une direction axiale à partir de ladite partie de couplage (52) avec des côtés intérieurs opposés l'un à l'autre transversalement à ladite direction axiale,
- Disposer et aligner l'extrémité libre de la tige filetée (4) coaxialement entre les bras (51),
- Relier les bras (51) à la broche filetée (4), les bras (51) étant moulés plastiquement dans le filetage extérieur (42).

17. Procédé selon la revendication 16, **caractérisé par le fait que** la distance transversale (A) entre les côtés intérieurs des bras (51) est inférieure au diamètre nominal du filet (G), au moins en sections, et que la broche filetée (4) est serrée élastiquement entre les bras (51).

18. Procédé selon l'une des revendications 16 à 17, **caractérisé par le fait qu'**un élément de fixation (6) supportant les bras (51) est fixé au corps de base (50).
